(19) Europäisches Patentamt
European Patent Office
Office européen des brevets

(11) **EP 4 474 238 A1**

(12) **EUROPEAN PATENT APPLICATION**

(43) Date of publication:
**11.12.2024  Bulletin 2024/50**

(21) Application number: **24174971.2**

(22) Date of filing: **08.05.2024**

(51) International Patent Classification (IPC):
**B60W 50/00** (2006.01)

(52) Cooperative Patent Classification (CPC):
**B60W 50/0098;** B60W 2050/0004;
B60W 2050/0031; B60W 2050/0096;
B60W 2720/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.06.2023  SE 2350688**

(71) Applicant: **VOLVO TRUCK CORPORATION
405 08 Göteborg (SE)**

(72) Inventors:
• **ÖZKAN, Basar
417 57 GÖTEBORG (SE)**
• **GELSO, Esteban
421 51 VÄSTRA FRÖLUNDA (SE)**
• **SADEGHI KATI, Maliheh
433 46 PARTILLE (SE)**
• **JONASSON, Mats
433 49 PARTILLE (SE)**

(74) Representative: **Ström & Gulliksson AB
P.O. Box 4188
203 13 Malmö (SE)**

(54)  **SWITCHING BETWEEN CONTROLLERS FOR A VEHICLE**

(57)  A computer-implemented method for switching between a first controller and a second controller for a vehicle, the method comprising, in a first operation stage, controlling an operational parameter of at least one MSD of the vehicle using the first controller, thereby providing a first tyre force at at least one tyre associated with the MSD, determining a second tyre force for the at least one tyre based on a vehicle model associated with the second controller, in a second operation stage, controlling the operational parameter of the at least one MSD using a third controller, comprising determining an intermediate value for the operational parameter based on the first and second tyre forces, and in a third operation stage, controlling the operational parameter of the at least one MSD using the second controller, thereby providing the second tyre force at the at least one tyre.

**FIG. 1**

Processed by Luminess, 75001 PARIS (FR)

EP 4 474 238 A1

**Description**

**TECHNICAL FIELD**

The disclosure relates generally to vehicle control. In particular aspects, the disclosure relates to switching between controllers for a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

**BACKGROUND**

In vehicle motion management, a control system of a vehicle may determine control signals for actuators of the vehicle in order to satisfy the requested global forces of the vehicle combination. For example, the control system may receive an input related to a manoeuvre for the vehicle combination and state information of the vehicle comprising motion parameters and determine control signals in the form of propulsion and braking instructions that meet the requested global forces of the vehicle subject to certain constraints, for example energy and safety constraints.

In some implementations, a vehicle control system may comprise a number of different controllers directed to different purposes. For example, it may be desired to minimise power losses, ensure vehicle stability, provide an efficient power distribution, and address many other issues. In other examples, a vehicle may be run as front wheel drive, rear wheel drive or all-wheel drive. The different controllers can be switched between dependent on current demands of the vehicle or the operator.

When it is desired to change between controllers, there is a possibility of unwanted oscillations, accelerations, instabilities, or operating conditions of the vehicle that can affect vehicle operation and safety. Furthermore, when trying to mitigate this issue, other inefficiencies in vehicle operation can become apparent.

It is therefore desired to develop a solution for vehicle motion management that addresses or at least mitigates some of these issues.

**SUMMARY**

This disclosure attempts to solve the problems noted above by providing systems and methods for switching between vehicle controllers. In particular, systems and methods are proposed in which control of an operation parameter of a motion support device (MSD) of a vehicle is switched from a first controller to a second controller via use of a third controller that provides intermediate control of the operational parameter. This can be achieved by transitioning from a tyre force resulting from control via the first controller to a tyre force resulting from control via the second controller. The intermediate control can also be optimised for different aspects of vehicle motion.

According to an aspect of the disclosure, there is provided a computer-implemented method for switching between a first controller and a second controller for a vehicle, the method comprising, by processing circuitry of a computer system, in a first operation stage, controlling an operational parameter of at least one MSD of the vehicle using the first controller, thereby providing a first tyre force at at least one tyre associated with the MSD, determining a second tyre force for the at least one tyre based on a vehicle model associated with the second controller, in a second operation stage, controlling the operational parameter of the at least one MSD using a third controller, comprising determining an intermediate value for the operational parameter based on the first and second tyre forces, and in a third operation stage, controlling the operational parameter of the at least one MSD using the second controller, thereby providing the second tyre force at the at least one tyre.

The method may provide a smooth transition between two controllers for a vehicle, as tyre forces to be produced by each controller are taken into account when providing intermediate control by a third controller. Therefore, the possibility of unwanted oscillations, accelerations, or other instability of the vehicle can be reduced, therefore improving vehicle operation and safety. The control can be optimised such that phenomena such as a jerk in the vehicle as it is travelling, a decrease in energy efficiency of the vehicle due to increased losses or consumption, an increase in tyre wear or tyre slip, or a decrease in tyre grip can be avoided.

Optionally, the computer-implemented method comprises determining the intermediate value for the operational parameter such that, at the onset of the second operation stage, the intermediate value for the operational parameter corresponds to the first tyre force. This enables a smooth transition between the first controller and the third controller during switching between the first and second operation stages.

Optionally, the computer-implemented method further comprises, during the first operation stage, determining a virtual value for the operational parameter using the third controller based on the first tyre force and one or more estimated states and/or parameters of the vehicle. This ensures that the third controller is prepared to take over from the first controller at the end of the first operation stage.

Optionally, the computer-implemented method comprises determining the virtual value for the operational parameter based on a vehicle model associated with the third controller. This enables the third controller to provide an accurate value of the operational parameter when it takes over from the first controller at the end of the first operation stage.

Optionally, the computer-implemented method comprises determining the intermediate value for the operational parameter such that, at the onset of the third operation stage, the intermediate value for the operational parameter corresponds to the second tyre force. This enables a smooth transition between the third controller and the second controller during switching between the second and third operation stages.

Optionally, the computer-implemented method comprises determining an optimised value for the operational parameter such that a difference between an allocated tyre force and a requested tyre force, and/or the integral of a difference between an allocated tyre force and a requested tyre force, is below a threshold. This ensures that the tyre forces are tracked throughout the second operation stage and do not deviate from intended values.

Optionally, the computer-implemented method comprises determining the optimised value for the operational parameter using a cost function. This provides a quantitative measure of how the third controller is performing.

Optionally, the cost function is based on one or more of acceleration of the vehicle, energy losses of the vehicle, peak power consumed by the MSD, peak/average power regenerated by the MSD, tyre grip, tyre wear, and tyre slip. This enables different factors to be taken into account during the second operation stage, such that the control can be tailored in a specific manner.

Optionally, the computer-implemented method comprises controlling the operational parameter of the at least one MSD of the vehicle using the first controller based on one or more estimated states of the vehicle. This ensures that the first controller is operating based on the latest states of the vehicle and can provide appropriate control.

Optionally, the computer-implemented method comprises determining the intermediate value for the operational parameter based on one or more estimated states and/or parameters of the vehicle. This ensures that the third controller is operating based on the latest states and/or parameters of the vehicle and can provide appropriate control.

Optionally, the third controller comprises a model predictive controller (MPC). An MPC is a flexible controller that is particularly effective in handling constraints on system variables.

Optionally, the operational parameter comprises a torque of the MSD or a speed of the MSD. This enables operation of the MSD to be controlled appropriately and for the control to be implemented in existing control interfaces.

Optionally, the computer-implemented method comprises the MSD comprises an electrical machine, a set of service brakes, a combustion engine, a steering system, or a suspension system. As such, a number of different actuators and subsystems of a vehicle can be controlled.

According to another aspect of the disclosure, there is provided a control system for a vehicle, the control system comprising a first controller configured to control an operational parameter of at least one MSD of the vehicle in a first operation stage, thereby providing a first tyre force at at least one tyre associated with the MSD, a second controller configured to determine a second tyre force for the at least one tyre based on a vehicle model associated with the second controller, and a third controller configured to determine an intermediate value for the operational parameter based on the first and second tyre forces, and control the operational parameter of the at least one MSD in a second operation stage based on the intermediate value, wherein the second controller is configured to control the operational parameter of the at least one MSD in a third operation stage, thereby providing the second tyre force at the at least one tyre.

The control system may provide a smooth transition between two controllers for a vehicle, as tyre forces to be produced by each controller are taken into account when providing intermediate control by a third controller. Therefore, the possibility of unwanted oscillations, accelerations, or other instability of the vehicle can be reduced, therefore improving vehicle operation and safety. The control can be optimised such that phenomena such as a jerk in the vehicle as it is travelling, a decrease in energy efficiency of the vehicle due to increased losses or consumption, an increase in tyre wear or tyre slip, or a decrease in tyre grip can be avoided.

Optionally, the third controller is configured to determine the intermediate value for the operational parameter such that, at the onset of the second operation stage, the intermediate value corresponds to the first tyre force, and/or at the onset of the third operation stage, the intermediate value corresponds to the second tyre force. This enables a smooth transition between controllers during switching between the different operation stages.

According to another aspect of the disclosure, there is provided a vehicle comprising processing circuitry to perform the computer-implemented method.

According to another aspect of the disclosure, there is provided a computer program product comprising program code for performing, when executed by processing circuitry, the computer-implemented method.

According to another aspect of the disclosure, there is provided a control system comprising one or more control units configured to perform the computer-implemented method.

According to another aspect of the disclosure, there is provided a non-transitory computer-readable storage medium comprising instructions, which when executed by processing circuitry, cause the processing circuitry to perform the computer-implemented method.

According to another aspect of the disclosure, there is provided a computer system comprising processing circuitry configured to perform the computer-implemented method.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows, in terms of functional blocks, a control system for a vehicle.
**FIG. 2** a flowchart of an example computer-implemented method for switching between a first controller and a second controller for a vehicle.
**FIG. 3** schematically shows the control system in a first operation stage
**FIG. 4** schematically shows the control system in the first operation stage
**FIG. 5** schematically shows the control system in a second operation stage
**FIG. 6** schematically shows the control system in a third operation stage
**FIG. 7** is a schematic diagram of an exemplary computer system for implementing examples disclosed herein, according to one example.
**FIG. 8** is a schematic drawing of a computer readable medium according to one example.
**FIG. 9** is a schematic block diagram of a control unit according to one example.

Like reference numerals refer to like elements throughout the description.

## DETAILED DESCRIPTION

The detailed description set forth below provides information and examples of the disclosed technology with sufficient detail to enable those skilled in the art to practice the disclosure.

A vehicle control system may comprise a number of different controllers for different purposes, which can be switched between dependent on current demands of the vehicle. Possible problems that may occur when switching from one controller that influences tyre forces to another include instability of the vehicle, unwanted oscillations, and large accelerations.

To remedy this, systems and methods are proposed for switching between first and second controllers for a vehicle. In particular, systems and methods are proposed in which control of an operation parameter of an MSD of a vehicle is switched from a first controller to a second controller via use of a third controller that provides intermediate control of the operational parameter. This can be achieved by transitioning from a tyre force resulting from control via the first controller to a tyre force resulting from control via the second controller. The optimisation of the control can be directed to different aspects of vehicle motion.

It will be appreciated that the methods disclosed herein can be used with any suitable form of vehicle. For example, the disclosure can be applied in vehicle combinations having a plurality of units, heavy-duty vehicles, such as trucks, buses, and construction equipment, in personal vehicles such as cars, vans, or motorbikes, or in any other suitable form of vehicle.

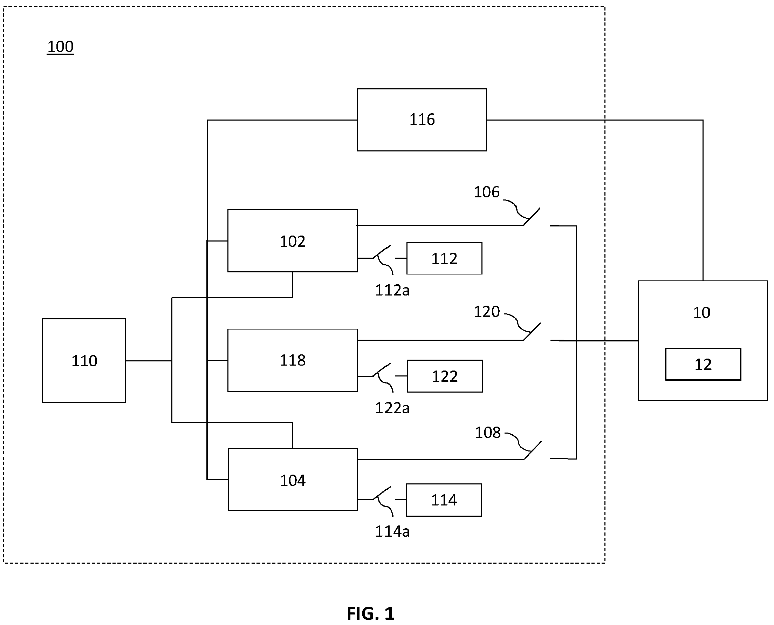

**FIG. 1** schematically shows a control system **100** for a vehicle **10**. The control system **100** is a computer system comprising processing circuitry configured to perform the various functions of the control system **100**. In particular, the various modules may be implemented as code running on a processing circuitry, or similar. The various modules may be communicatively connected or connectable to each other, for example as known in the art. The control system **100** may be implemented on-board the vehicle **10** or remotely from the vehicle **10**.

The control system **100** comprises a number of controllers configured to control motion of the vehicle **10** in different ways. In the example of **FIG. 1,** the control system **100** comprises a first controller **102** and a second controller **104**. The first and second controllers **102, 104** are configured to control an operational parameter of one or more MSDs **12** of the vehicle **10**. Whilst two such controllers are shown in **FIG. 1,** it will be appreciated that the control system **100** may comprise any suitable number of controllers directed to suitable number of purposes.

An MSD **12** may be any suitable actuator or subsystem of the vehicle **10**. For example, an MSD **12** may be any one of an electrical machine (e.g. an electric motor), a set of service brakes, a combustion engine, a steering system (e.g. a steering system controlled by an electric motor), or a suspension system (e.g. an active or semi-active suspension system). It will be appreciated that the vehicle **10** may have any suitable number of MSDs **12** to enable operation and control of the vehicle **10.** An MSD **12** may be associated with a single wheel/tyre, two or more wheels/tyres on a common axle, or any suitable number of wheels/tyres.

The operational parameter of the MSD **12** may be a torque or a speed of the MSD **12.** The speed of an MSD **12** may be related to a wheel speed or a wheel slip, for example in the case of an electrical machine that drives one or more wheels of the vehicle **10.** In some examples, one set of controllers may control a torque of one or more MSDs **12,** while another set of controllers may control a speed of one or more MSDs **12.** This enables operation of the MSD **12** to be controlled appropriately and for the control to be implemented in existing control interfaces. The first and second controllers **102, 104** are communicatively connectable to the vehicle **10,** via respective switches **106, 108,** such that they can control the operational parameter of the one or more MSDs **12.**

The first and second controllers **102, 104** are also communicatively connected to a target generator **110** that provides a requested control input for the vehicle **10** to the controllers. The manoeuvre may be, for example, straight-line driving, cornering, braking and the like. The target generator **110** may receive a signal from, for example, a steering wheel and/or gas/brake pedal of the vehicle **10,** indicating that the driver (or some other system of the vehicle **10**) wants to change the direction and/or the speed of the vehicle combination **10** in a certain way. In some examples, the signal may originate from elsewhere, for example any other system that may provide some indication of how the overall forces of the vehicle **10** are to be influenced (e.g. steered, propelled or braked). For example, the signal may originate from a lane assist system, a lane following system, an emergency steering system, an emergency braking system, an automated or semi-automated drive system. Based on this input, and in some examples a motion capability for the vehicle **10,** the target generator **110** outputs the requested control input.

The first and second controllers **102, 104** are also communicatively connected to respective first and second vehicle models **112, 114.** For example, the first and second controllers **102, 104** may be communicatively connected to the first and second vehicle models **112, 114** via respective switches **112a, 114a.** The first and second vehicle models **112, 114** may be any suitable vehicle models known in the art. The first and second vehicle models **112, 114** may be used to model motion of the vehicle **10,** including values for the operation parameter of the MSDs **12.** In this way, offline controllers can model motion of the vehicle **10** while it is being controlled by an online controller, as will be discussed below. In particular, the first and second vehicle models **112, 114** may be used to model the vehicle velocity, tyre forces, a torque of one or more electric motors, an angular velocity of one or more electric motors, a twist angle of the shaft of one or more electric motors, and/or an angular velocity of one or more wheels, along with any other suitable variables for longitudinal or lateral motion of the vehicle **10.** The first and second vehicle models **112, 114** may have a prediction horizon of the order of a number of seconds. The first and second vehicle models **112, 114** may be based on estimated states and/or parameters of the vehicle **10,** which are received from an estimator **116.** States of the vehicle **10** include transient variables such as velocity, position, pressure, and the like. Parameters of the vehicle **10** include values that describe the vehicle and are generally constant, such as mass, tyre stiffness, tyre radius, and the like. The first and second vehicle models **112, 114** may also be based on inputs such as road inclination, air drag force and reference values for tyre forces. The first and second vehicle models **112, 114** may be constrained by parameters such as actuator limits of the vehicle **10.** As will be discussed below, a vehicle model may be used when its respective controller is offline, i.e. not controlling the vehicle **10.**

The estimator **116** is communicatively connected to the vehicle and configured to receive sensor measurements from the vehicle **10.** The sensor measurements may come from sensors on board the vehicle **10,** such as wheel speed sensors, inertial measurement units (IMUs, containing accelerometers, gyroscopes, and magnetometers), electric machine speed sensors, global positioning systems, LIDAR sensors, radar sensors, cameras, and the like. Based on the sensor measurements, the estimator **116** estimates states and/or parameters of the vehicle **10.** In particular, the estimator **116** is configured to estimate the tyre forces and the tyre stiffnesses of the vehicle **10.** In some examples, the estimator **116** may be omitted, and the sensors of the vehicle **10** may be configured to perform estimation of states and/or parameters themselves or measure them directly.

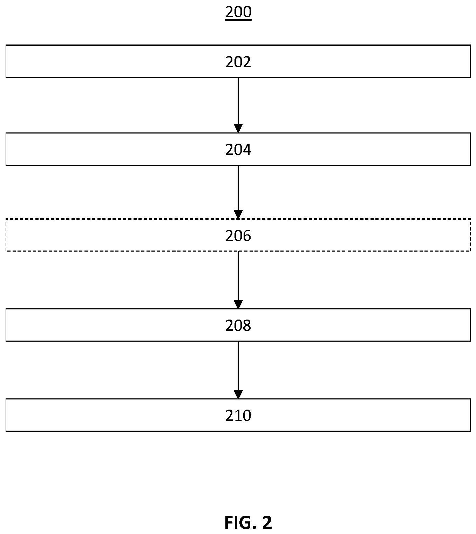

In one example, as will be described in relation to **FIGs. 2** to **6,** the first controller **102** may be communicatively connected to the vehicle **10** (i.e. the switch **106** is closed, while the switch **112a** is open) and controls an operational parameter of the one or more MSDs **12** of the vehicle **10.** This control results in a first tyre force being provided at one or more tyres associated with the MSD **12** (for example, where a wheel is driven by an electric motor). The first controller **102** may therefore be referred to as the "online" controller. The second controller **104** is then referred to as the "offline" controller (i.e. the switch **108** is open, while the switch **114a** is closed). The second controller **104** models motion of the vehicle **10** using the vehicle model **114,** including the operational parameter of the one or more MSDs **12.** This results in a second (modelled) tyre force being provided for the one or more tyres. That is to say, the second tyre force is provided in the vehicle model **114,** and not at the actual tyres of the vehicle **10.**

It may then be desired to switch control from the first controller **102** to the second controller **104.** This may be due to the desire to control the vehicle **10** in a different way, for example to reduce power losses or increase safety of vehicle operation. To do this, a third controller **118** is implemented in order to control the transition between the first controller **102** and the second controller **104.** The third controller **118** is communicatively connectable to the vehicle **10,** via a respective switch **120,** such that it can control an operational parameter of the one or more MSDs **12.** The third controller **118** may also be communicatively connected to the target generator **110.**

The third controller **118** is communicatively connected to a third vehicle model **122,** which may be substantially similar to the first and second vehicle models **112, 114.** For example, the third controller **118** may be communicatively connected to the third vehicle model **122** via switch **122a.** In particular, the third vehicle model **122** may be used to model motion of the vehicle **10,** including values for the operation parameter of the MSDs **12,** based on estimated states and parameters of the vehicle **10** received from the estimator **116.** Use of the third vehicle model **122** will be described later.

In order to switch control from the first controller **102** to the second controller **104,** the third controller **118** takes over control of the vehicle **10** from the first controller **102** (i.e. the switch **106** is opened, while the switch **120** is closed). Subsequently, the second controller **104** takes over control of the vehicle **10** from the third controller **118** (i.e. the switch **120** is opened, while the switch **108** is closed).

In operation (i.e. while the switch **120** is closed), the third controller **118** is configured to determine an intermediate value for the operational parameter of the one or more MSDs **12** based on the first and second tyre forces associated with the first and second controllers **102, 104.** The third controller **118** can then control the operational parameter of the one or more MSDs **12** such that a smooth transition is provided between the first controller **102** and the second controller **104.** The second controller **104** can then control the operational parameter of the one or more MSDs **12** as desired.

In some examples, the third controller **118** is a model predictive controller (MPC). MPC design is flexible and the third controller **118** can therefore be configured to meet different requirements. In some examples, the MPC can be configured to ensure that the difference between an allocated tyre force and a requested tyre force is below a threshold, or even minimised. In some examples, the MPC can be configured to ensure that the integral of a difference between an allocated tyre force and a requested tyre force is below a threshold, or even minimised. In other examples, the third controller **118** may be another type of controller such as a linear quadratic regulator (LQR).

By use of the control system **100** described above, a smooth transition may be provided between two controllers for a vehicle, as tyre forces to be produced by each controller are taken into account when providing intermediate control by a third controller. Therefore, the possibility of unwanted oscillations, accelerations, or other instability of the vehicle can be reduced, therefore improving vehicle operation and safety. The control can be optimised such that phenomena such as a jerk in the vehicle as it is travelling, a decrease in energy efficiency of the vehicle due to increased losses or consumption, an increase in tyre wear or tyre slip, or a decrease in tyre grip can be avoided.

**FIG. 2** is a flowchart of an example computer-implemented method **200** for switching between a first controller and a second controller for a vehicle, such as the first and second controllers **102, 104** illustrated in **FIG. 1.** The method may be implemented by processing circuitry, for example as code running on a processing circuitry, or similar. In particular, the method **200** may be implemented by the control system **100.**

The first controller **102** controls the operational parameter of an MSD **12** of the vehicle **10** in first operation stage at **202.** In the following, control of a single MSD **12** will be referred to for simplicity, however it will be appreciated that more than one MSD **12** could be controlled, as discussed above.

Control of the vehicle **10** by the first controller **102** results in a certain motion of the vehicle **10.** In particular, a tyre force is produced at each of the tyres of the vehicle **10.** Control of an MSD **12** by the first controller **102** therefore results in a first tyre force at at least one tyre associated with the MSD **12.** As discussed above, an MSD **12** may be associated with a single wheel/tyre, two or more wheels/tyres on a common axle, or any suitable number of wheels/tyres.

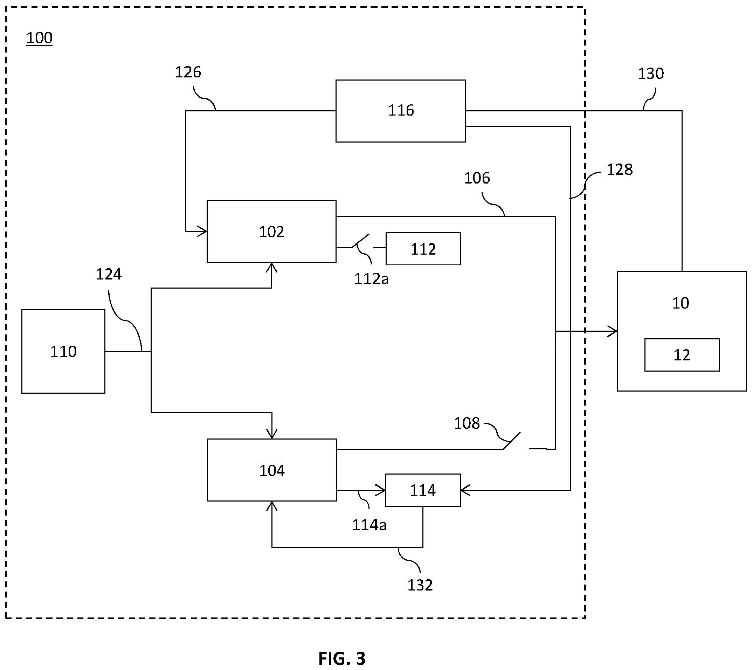

This first stage of operation is illustrated in **FIG. 3.** The first controller **102** is communicatively connected to the vehicle **10** (i.e. the switch **106** is closed). The first controller **102** is therefore "online". As the first controller **102** is online, the first vehicle model **112** is not used (i.e. the switch **112a** is open). The second controller **104** is disconnected from the vehicle **10** (i.e. the switch **108** is open) and connected to the second vehicle model **114** (i.e. the switch **114a** is closed), and is therefore "offline". The third controller **118** is not operational in this stage, and is therefore omitted.

In the first operation stage, the first controller **102** receives the requested control input **124** from the target generator **110** and controls the vehicle **10** accordingly, in line with the particular purpose for which the first controller **102** is configured. In particular, the first controller **102** controls an operational parameter an MSD **12** of the vehicle. For example, the first controller **102** controls the torque or speed of the MSD **12.** The first controller **102** may also receive estimated states **126** from the estimator **116.** The estimated states **126** can be used by the first controller **102** to ensure that accurate values are used to interpret and implement the requested control input **124** from the target generator **110.** The estimated states **126,** along with the estimated parameters **128,** are determined by the estimator **116** based on sensor data **130** received from the vehicle **10.**

Whilst is it offline, the second controller **104** determines a second tyre force for the at least one tyre associated with the MSD **12** controlled by the first controller **102** at **204.** In particular, the second controller **104** runs the vehicle model **114** to model the operational parameter of the MSD **12** and determine the second tyre force (the switch **114a** is closed). The second controller **104** receives the requested control input from the target generator **110.** The second vehicle model **114** received estimated parameters **128** from the estimator **116.** In particular, the estimated parameters **128** may include the tyre stiffnesses. In this way, the vehicle model **114** can be updated with the latest parameters of the vehicle **10,** received from the estimator **116**. The second controller **104** then runs the vehicle model **114** accordingly, and may also receive estimated states **132** from the vehicle model **114**. This provides an accurate model of the real vehicle **10,** and thereby accurately modelled tyre forces for each of the tyres of the vehicle model **114**. In some examples the second controller **104** may also receive estimated states **126** from the estimator **116**.

Returning to **FIG. 2,** when it is determined that a change of controller is desired, the third controller **118** may be prepared to take over from the first controller **102** at **206**. In this preparation stage, the vehicle model **122** associated with the third controller **118** may be initialised with estimates of the states and/or parameters of the real vehicle **10** so that so that it produces the same tyre forces as the first controller **102**. In this preparation stage, the third controller **118** is working offline and is being prepared for connection to the real vehicle **10**. The enables to third controller **118** to take over control of the real vehicle **10** from the first controller **102** in a smooth manner.

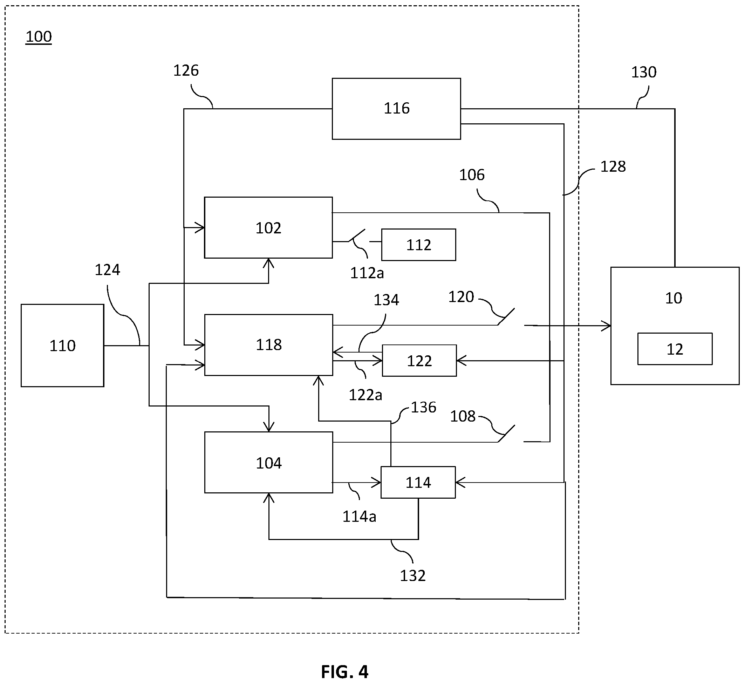

This preparatory stage is illustrated in **FIG. 4**. The first controller **102** is still online and the second controller **104** is still offline. The third controller **118** is now operational and in its preparatory stage, thus the switch **120** is open while the switch **122a** is closed. The third controller **118** runs the third vehicle model **122** to determine a virtual value for the operational parameter of the MSD **12**. The third controller **118** may also receive estimated states **134,** including tyre force estimates, from the third vehicle model **122**. Use of the third vehicle model **122** enables the third controller **118** to provide an accurate value of the operational parameter when it takes over from the first controller **102** at the end of the first operation stage.

The third controller **118** may receive the estimated states **126** and/or parameters **128,** in particular the tyre stiffnesses, from the estimator **116**. In this way, a model run by the third controller **118** (for example an MPC model) can be updated with the latest states and/or parameters of the vehicle **10**. As part of the estimated states **126,** the third controller **118** may receive tyre force estimates from the estimator **116**. This includes the first tyre force provided at the at least one tyre associated with the MSD **12** controlled by the first controller **102**. The estimated parameters **128** may also be sent from the estimator **116** to the third vehicle model **122**. In this way, the third vehicle model **122** can be updated with the latest parameters of the vehicle **10**.

The third controller **118** may also receive tyre force estimates **136** from the second vehicle model **114**. This includes the second tyre force for the at least one tyre associated with the MSD **12** controlled by the first controller **102**. This information may be saved by the third controller **118** for use as a reference force during later transitioning to the second controller **104**.

If the third vehicle model **122** is true to the real vehicle **10,** then the virtual value for the operational parameter should be close to the value provided by the third controller **118** when it takes over from the first controller **102**. If the third vehicle model **122** is not true to the real vehicle **10,** there may be a difference in these values that causes a jump when the third controller **118** is connected to the vehicle **10**. In some examples, the third controller **118** could be designed in such a way that no preparation stage is necessary

Returning to **FIG. 2,** when the third controller **118** is ready, it takes over from the first controller **102** to control the operational parameter of the MSD **12** in second operation stage at **208**. In particular, the third controller **118** determines an intermediate value for the operational parameter based on the first and second tyre forces received respectively from the estimator **116** and the second vehicle model **114**. Control of the vehicle **10** by the third controller **118** results in a certain motion of the vehicle **10**. In particular, a tyre force is produced at each of the tyres of the vehicle **10**. Control of an MSD **12** by the third controller **118** therefore results in a particular tyre force at at least one tyre associated with the MSD **12**. The third controller **118** controls the operational parameter of the MSD **12** such that this tyre force transitions smoothly from the first tyre force that was provided by the first controller **102**.

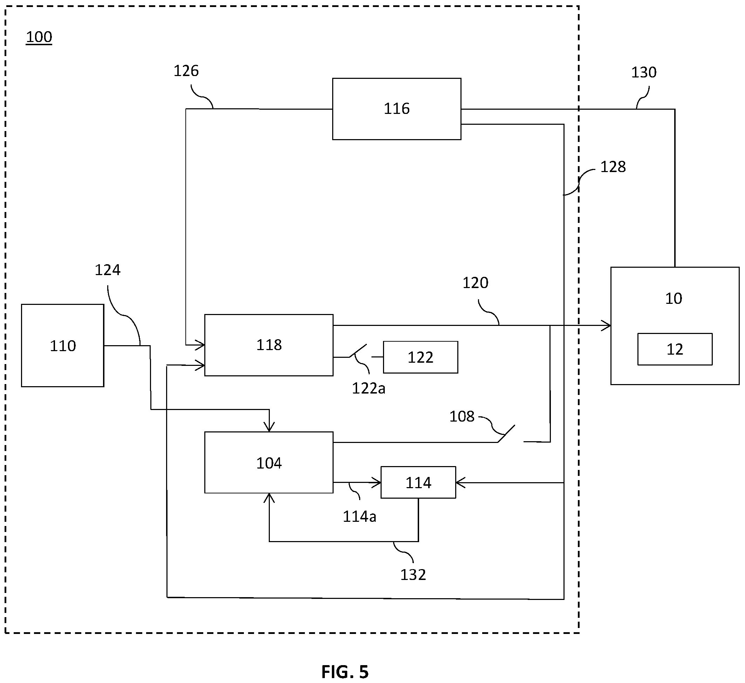

This second stage of operation is illustrated in **FIG. 5**. The third controller **118** is communicatively connected to the vehicle **10** (i.e. the switch **120** is closed). The third controller **118** is therefore "online". As the third controller **118** is online, the third vehicle model **122** is not used (i.e. the switch **122a** is open). The second controller **104** is still offline. The first controller **102** is not operational in this stage, and is therefore omitted, although it will be envisaged that the switch **106** is open while the switch **112a** is closed so that the first controller **102** may run the first vehicle model **112**.

During the second operation stage, the third controller **118** determines an intermediate value for the operational parameter such that the tyre forces are optimally changed from the first tyre force of the first controller **102** to second tyre force of the second controller **104**. As discussed above, the third controller **118** receives the first tyre force from the estimator **116** and the second tyre force from the second vehicle model **114**. In some examples, the third controller **118** is configured to determine the intermediate value for the operational parameter such that, at the time the third controller **118** takes over from the first controller **102** (i.e. at the onset of the second operation stage), the intermediate value corresponds to the first tyre force. This provides a smooth transition between the first controller **102** and the third controller **118**. In some examples, the third controller **118** is configured to determine the intermediate value for the operational parameter such that, at the time the second controller **104** takes over from the third controller **118** (i.e. at the onset of a third operation stage to be discussed below), the intermediate value corresponds to the second tyre force. This provides a smooth transition between the third controller **118** and the second controller **104**.

To determine the intermediate value for the operational parameter during the second operation stage, the third controller **118** determines a value at a number of timesteps. That is to say, the third controller 118 determines a number of intermediate values for the operational parameter during the second operation stage. An example timestep may have a length of 0.01 seconds. In such an example, if the transfer from the first controller **102** to the second controller **104** takes one second (i.e. the third controller is in control for one second), 100 intermediate values will be calculated. In some embodiments, a linear or other type of interpolation may be used. Therefore, a smooth transition is provided between the first controller **102** and the second controller **104.**

The third controller **118** receives the estimated states **126** from the estimator **116**. The third controller **118** may additionally or alternatively receive the estimated parameters **128,** in particular the tyre stiffnesses, from the estimator **116**. The third controller **118** can then determine the intermediate value for the operational parameter of the MSD **12** based on the latest states and/or parameters of the vehicle **10.**

As discussed above, during the second operation stage, the third controller **118** may determine an optimised value for the operational parameter. This optimisation can be done in a number of different ways.

In some examples, error states of the tyre forces can be tracked and the operational parameter can be adjusted accordingly. This ensures that the tyre forces are tracked throughout the second operation stage and do not deviate from intended values. For example, a difference between an allocated tyre force (i.e. the tyre force experienced by the real vehicle **10)** and a requested tyre force (i.e. the tyre force intended to be implemented by the third controller **118)** can be determined. If this difference is above a threshold, the operational parameter of the MSD **12** can be adjusted in order to reduce, or even minimise the difference. In another example, the integral of the difference between an allocated tyre force and a requested tyre force can be determined and maintained below a threshold, or even minimised. As discussed above, the requested tyre force at the onset of the second operation stage corresponds to the first tyre force, while the requested tyre force at the onset of a third operation stage corresponds to the second tyre force. The third controller **118** may change this tyre force during the second operation stage in an optimal way.

In some examples, the third controller **118** determines an optimised value for the operational parameter using a cost function. This provides a quantitative measure of how the third controller is performing. The cost function may include the reference tyre forces discussed above, such that a cost associated with the difference between the allocated tyre force and the requested tyre force is maintained below a threshold, or even minimised.

The cost function may also be based on other factors, each having associated weights, in order to tune the cost function to give a desired performance. While achieving the primary goal of a smooth transition between the first and second controllers **102, 104,** these other factors can be added to the cost function so that the control is optimised in some particular way, depending on how much weight is put on each factor in the function.

For example, the cost function may be based on one or more of acceleration of the vehicle **10,** energy losses of the vehicle **10,** peak power consumed by the MSD **12,** peak/average power regenerated by the MSD **12,** tyre grip, tyre wear, and tyre slip. For example, the operational parameter can be optimised to reduce jerk (large changes in acceleration) in the vehicle **10** for the purposes of comfort. The operational parameter can be optimised to reduce energy losses of the vehicle **10** to increase energy efficiency. The operational parameter can be optimised to reduce the peak power consumed by the MSD **12** in order not to reach the limit of power that can be obtained from a battery. The operational parameter can be optimised to reduce tyre wear, for example by reducing the integral of the tyre slip. The operational parameter can be optimised to reduce tyre slip in order to maintain stability of the vehicle **10.** The operational parameter can be optimised to reduce the peak/average power regenerated by the MSD **12** to avoid system limits. The operational parameter can be optimised to increase peak/average power regenerated by the MSD **12** to increase energy efficiency. The operational parameter can be optimised to increase tyre grip in order to increase stability of the vehicle **10.**

These factors can be implemented as terms in the cost function or as constraints for the cost function. For example, the cost function can be minimised while some terms are forced to be between certain limits. Setting constraints on certain factors while solving a cost minimisation is a major advantage of using an MPC for the third controller **118.**

An example cost function is shown in equation (1) below:

$$V_N\big(x(0), u(0{:}N-1)\big)$$
$$= x^T(N)P_f x(N) + \sum_{i=0}^{N-1}\big(x^T(i)Qx(i) + u^T(i)Ru(i)\big) \quad (1)$$

where, *V* is the total cost to be minimised, *N* is the prediction horizon (how many iterations will be use in the optimisation process, *x* is a vector of the states of the model, $P_f$ is the final cost, *Q* is the cost at each iteration, *u* is the vector of controller outputs (for example torques or speeds), and *R* is a vector of weights for the controller outputs. *T* indicates that the transpose of a vector is taken. $P_f$, *Q*, and *R* are square matrices which may contain calibration parameters of the third controller **118**. In the case that the third controller **118** in an MPC, the MPC model is used to predict the states *x* during the prediction horizon *N*. The MPC model is typically added to the (equality) constraints of the optimization problem. If it is desired to minimise, a particular state, the weight on that state can be increased. In some examples, *R* is kept constant while $P_f$ and *Q* are changed for the desired outcome.

Returning to **FIG. 2,** when the third controller **118** has transitioned between the first controller **102** and the second controller **104,** the second controller **104** takes over from the third controller **118** to control the operational parameter of the MSD **12** in third operation stage at **210**.

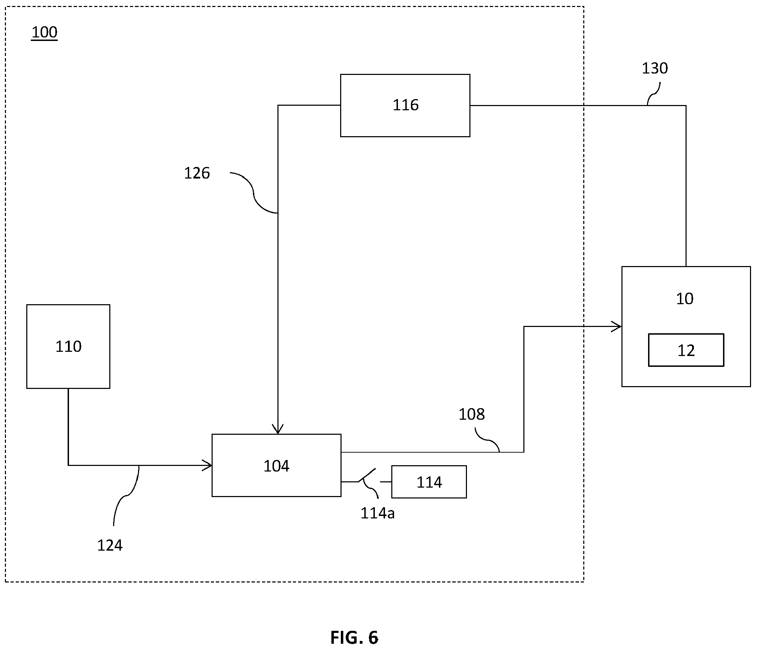

This third stage of operation is illustrated in **FIG. 6**. The second controller **104** is communicatively connected to the vehicle **10** (i.e. the switch **108** is closed). The second controller **104** is therefore online. As the second controller **104** is online, the second vehicle model **114** is not used (i.e. the switch **114a** is open). The first controller **102** and third controller **118** are offline and not operational in this stage, and are therefore omitted, although it will be envisaged that the switch **106** is open while the switch **112a** is closed so that the first controller **102** may run the first vehicle model **112,** and that the switch **120** is open while the switch **122a** is closed so that the third controller **118** may run the third vehicle model **122**.

In the third operation stage, the second controller **104** receives the requested control input **124** from the target generator **110** and controls the vehicle **10** accordingly, in line with the particular purpose for which the second controller **104** is configured. In particular, the second controller **104** controls the operational parameter of the MSD **12** of the vehicle such that the second tyre force is provided at the at least one tyre associated with the MSD **12**. The second controller **104** may also receive estimated states **126** from the estimator **116**. The estimated states **126** can be used by the second controller **104** to ensure that accurate values are used to interpret and implement the requested control input **124** from the target generator **110**.

As discussed above, the third controller **118** may be configured to determine the value for the operational parameter such that, at the time the second controller **104** takes over from the third controller **118** (i.e. at the onset of the third operation stage), the value corresponds to the second tyre force. This provides a smooth transition between the third controller **118** and the second controller **104**.

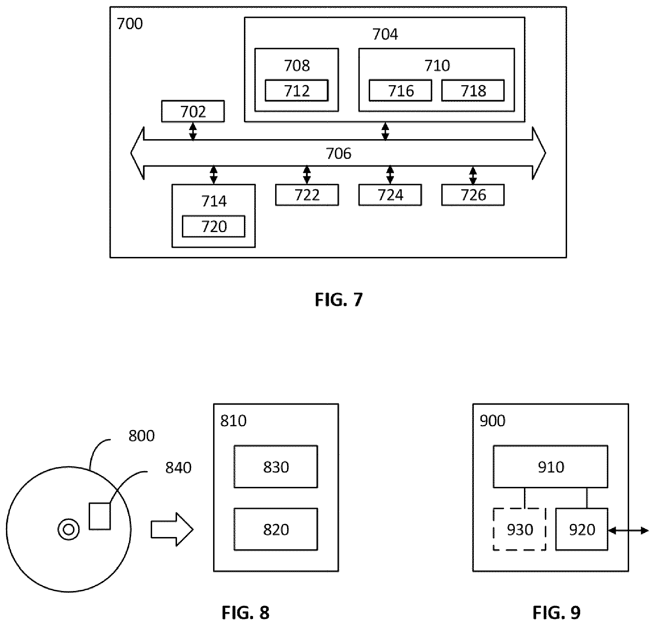

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702** (may also be referred to as a control unit), a memory **704,** and a system bus **706**. The computer system **700** may include at least one computing device having the processor device **702**. The system bus **706** provides an interface for system components including, but not limited to, the memory **704** and the processor device **702**. The processor device **702** may include any number of hardware components for conducting data or signal processing or for executing computer code stored in memory **704**. The processor device **702** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processor device **702**. A basic input/output system (BIOS) **712** may be stored in the non-volatile memory **708** and can include the basic routines that help to transfer information between elements within the computer system **700**.

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **718**. All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processor device **702** to carry out the steps described herein. Thus, the computer-readable program code can comprise software instructions for implementing the functionality of the examples described herein when executed by the processor device **702**. The processor device **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 8** illustrates an example computer readable medium in the form of a compact disc (CD) ROM **800.** The computer readable medium has stored thereon a computer program **840** comprising program instructions. The computer program is loadable into a data processor (e.g., a data processing unit) **820,** which may, for example, be comprised in a vehicle control unit **810.** When loaded into the data processor, the computer program may be stored in a memory **830** associated with, or comprised in, the data processor. According to some examples, the computer program may, when loaded into, and run by, the data processor, cause execution of method steps according to, for example, any of the methods described herein.

**FIG. 9** schematically illustrates, in terms of a number of functional units, the components of a control unit **900** according to some examples. The control unit may be comprised in a vehicle, e.g., in the form of a vehicle motion management (VMM) unit. A processor device in the form of processing circuitry **910** is provided using any combination of one or more of a suitable central processing unit (CPU), multiprocessor, microcontroller, digital signal processor (DSP), or similar; capable of executing software instructions stored in a computer program product, e.g. in the form of a storage medium **930**. The processing circuitry **910** may further be provided as at least one application specific integrated circuit ASIC, or field programmable gate array FPGA.

Particularly, the processing circuitry **910** is configured to cause the control unit **900** to perform a set of operations, or steps; for example, the method discussed in relation to **FIG. 2.**

For example, the storage medium **930** may store a set of operations, and the processing circuitry **910** may be configured to retrieve the set of operations from the storage medium **930** to cause the control unit **900** to perform the set of operations. The set of operations may be provided as a set of executable instructions. Thus, the processing circuitry **910** is thereby arranged to execute methods as herein disclosed.

The storage medium **930** may comprise persistent storage, which, for example, can be any single one or combination of magnetic memory, optical memory, solid state memory or even remotely mounted memory.

The control unit **900** may further comprise an interface **920** for communication with at least one external device. As such, the interface **920** may comprise one or more transmitters and receivers, comprising analogue and digital components and a suitable number of ports for wireline or wireless communication.

The processing circuitry **910** controls the general operation of the control **unit 900,** e.g., by sending data and control signals to the interface **920** and the storage medium **930,** by receiving data and reports from the interface **920,** and by retrieving data and instructions from the storage medium **930.** Other components, as well as the related functionality, of the control node are omitted in order not to obscure the concepts presented herein.

In some examples, the control unit **900** may be seen as a control system, or may be comprised in a control system. The control system may be configured for vehicle motion management (VMM). In some examples, the control system is configured to individually control vehicle units and/or vehicle axles and/or wheels of a multi-unit combination vehicle via a dynamic model of the vehicle, which is based on a detected order among vehicle units and/or a detected order among wheel axles.

According to certain examples, there is also disclosed:

Example 1. A computer-implemented method (200) for switching between a first controller (102) and a second controller (104) for a vehicle (10), the method comprising, by processing circuitry of a computer system:

in a first operation stage, controlling (202) an operational parameter of at least one motion support device "MSD" (12) of the vehicle using the first controller, thereby providing a first tyre force at at least one tyre associated with the MSD;
determining (204) a second tyre force for the at least one tyre based on a vehicle model (114) associated with the second controller;
in a second operation stage, controlling (208) the operational parameter of the at least one MSD using a third controller (118), comprising determining an intermediate value for the operational parameter based on the first and second tyre forces; and
in a third operation stage, controlling (210) the operational parameter of the at least one MSD using the second controller, thereby providing the second tyre force at the at least one tyre.

Example 2. The computer-implemented method (200) of example 1, comprising determining the intermediate value for the operational parameter such that, at the onset of the second operation stage, the intermediate value for the operational parameter corresponds to the first tyre force.

Example 3. The computer-implemented method (200) of example 2, further comprising, during the first operation stage, determining (206) a virtual value for the operational parameter using the third controller (118) based on the first tyre force and one or more estimated states (126, 134, 136) and/or parameters (128) of the vehicle (10).

Example 4. The computer-implemented method (200) of example 3, comprising determining (206) the virtual value for the operational parameter based on a vehicle model (122) associated with the third controller.

Example 5. The computer-implemented method (200) of any preceding example, comprising determining the intermediate value for the operational parameter such that, at the onset of the third operation stage, the intermediate value for the operational parameter corresponds to the second tyre force.

Example 6. The computer-implemented method (200) of any preceding example, comprising determining an optimised value for the operational parameter by maintaining a difference between an allocated tyre force and a requested tyre force, and/or the integral of a difference between an allocated tyre force and a requested tyre force, below a threshold.

Example 7. The computer-implemented method (200) of example 6, comprising determining the optimised value for the operational parameter using a cost function.

Example 8. The computer-implemented method (200) of example 7, wherein the cost function is based on one or more of acceleration of the vehicle (10), energy losses of the vehicle, peak power consumed by the MSD (12), peak/average power regenerated by the MSD, tyre grip, tyre wear, and tyre slip.

Example 9. The computer-implemented method (200) of any preceding example, comprising controlling (202) the operational parameter of the at least one MSD (12) of the vehicle (10) using the first controller (102) based on one or more estimated states (126) of the vehicle.

Example 10. The computer-implemented method (200) of any preceding example, comprising determining the intermediate value for the operational parameter based on one or more estimated states (126) and/or parameters (128) of the vehicle (10).

Example 11. The computer-implemented method (200) of any preceding example, wherein the third controller (118) comprises a model predictive controller.

Example 12. The computer-implemented method (200) of any preceding example, wherein the operational parameter comprises a torque of the MSD (12) or a speed of the MSD.

Example 13. The computer-implemented method (200) of any preceding example, wherein the MSD (120) comprises an electrical machine, a set of service brakes, a combustion engine, a steering system, or a suspension system.

Example 14. A control system (100) for a vehicle (10), the control system comprising:

a first controller (102) configured to control (202) an operational parameter of at least one motion support device "MSD" (12) of the vehicle in a first operation stage, thereby providing a first tyre force at at least one tyre associated with the MSD;
a second controller (104) configured to determine (204) a second tyre force for the at least one tyre based on a vehicle model (114) associated with the second controller; and
a third controller (118) configured to:

determine an intermediate value for the operational parameter based on the first and second tyre forces; and
control (208) the operational parameter of the at least one MSD in a second operation stage based on the intermediate value; wherein

the second controller is configured to control (210) the operational parameter of the at least one MSD in a third operation stage, thereby providing the second tyre force at the at least one tyre.

Example 15. The control system (100) for of example 14, wherein the third controller (118) is configured to determine the intermediate value for the operational parameter such that:

at the onset of the second operation stage, the intermediate value corresponds to the first tyre force, and/or
at the onset of the third operation stage, the intermediate value corresponds to the second tyre force.

Example 16. A vehicle (10) comprising processing circuitry to perform the computer-implemented method (200) of any of examples 1 to 13.

Example 17. A computer program product comprising program code for performing, when executed by processing circuitry, the computer-implemented method (200) of any of examples 1 to 13.

Example 18. A control system comprising one or more control units configured to perform the computer-implemented method (200) of any of examples 1 to 13.

Example 19. A non-transitory computer-readable storage medium comprising instructions, which when executed by processing circuitry, cause the processing circuitry to perform the computer-implemented method (200) of any of examples 1 to 13.

Example 20. A computer system comprising processing circuitry configured to perform the computer-implemented method (200) of any of examples 1 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

**Claims**

1. A computer-implemented method (200) for switching between a first controller (102) and a second controller (104) for a vehicle (10), the method comprising, by processing circuitry of a computer system:

   in a first operation stage, controlling (202), an operational parameter of at least one motion support device "MSD" (12) of the vehicle using the first controller, thereby providing a first tyre force at at least one tyre associated with the MSD;
   determining (204) a second tyre force for the at least one tyre based on a vehicle model (114) associated with the second controller;
   in a second operation stage, controlling (208) the operational parameter of the at least one MSD using a third controller (118), comprising determining an intermediate value for the operational parameter based on the first and second tyre forces; and
   in a third operation stage, controlling (210) the operational parameter of the at least one MSD using the second controller, thereby providing the second tyre force at the at least one tyre.

2. The computer-implemented method (200) of claim 1, comprising determining the intermediate value for the operational parameter such that, at the onset of the second operation stage, the intermediate value for the operational parameter corresponds to the first tyre force.

3. The computer-implemented method (200) of claim 2, further comprising, during the first operation stage, determining (206) a virtual value for the operational parameter using the third controller (118) based on the first tyre force and one or more estimated states (126, 134, 136) and/or parameters (128) of the vehicle (10).

4. The computer-implemented method (200) of claim 3, comprising determining (206) the virtual value for the operational parameter based on a vehicle model (122) associated with the third controller.

5. The computer-implemented method (200) of any preceding claim, comprising determining the intermediate value for the operational parameter such that, at the onset of the third operation stage, the intermediate value for the operational parameter corresponds to the second tyre force.

6. The computer-implemented method (200) of any preceding claim, comprising determining an optimised value for the operational parameter such that a difference between an allocated tyre force and a requested tyre force, and/or the integral of a difference between an allocated tyre force and a requested tyre force, is below a threshold.

7. The computer-implemented method (200) of claim 6, comprising determining the optimised value for the operational parameter using a cost function based on one or more of acceleration of the vehicle (10), energy losses of the vehicle, peak power consumed by the MSD (12), peak/average power regenerated by the MSD, tyre grip, tyre wear, and tyre slip.

8. The computer-implemented method (200) of any preceding claim, comprising controlling (202) the operational parameter of the at least one MSD (12) of the vehicle (10) using the first controller (102) based on one or more estimated states (126) of the vehicle.

9. The computer-implemented method (200) of any preceding claim, comprising determining the intermediate value for the operational parameter based on one or more estimated states (126) and/or parameters (128) of the vehicle (10).

10. The computer-implemented method (200) of any preceding claim, wherein the third controller (118) comprises a model predictive controller.

11. The computer-implemented method (200) of any preceding claim, wherein the operational parameter comprises a torque of the MSD (12) or a speed of the MSD.

12. A control system (100) for a vehicle (10), the control system comprising:

a first controller (102) configured to control (202) an operational parameter of at least one motion support device "MSD" (12) of the vehicle in a first operation stage, thereby providing a first tyre force at at least one tyre associated with the MSD;
a second controller (104) configured to determine (204) a second tyre force for the at least one tyre based on a vehicle model (114) associated with the second controller; and
a third controller (118) configured to:

determine an intermediate value for the operational parameter based on the first and second tyre forces; and
control (208) the operational parameter of the at least one MSD in a second operation stage based on the intermediate value; wherein

the second controller is configured to control (210) the operational parameter of the at least one MSD in a third operation stage, thereby providing the second tyre force at the at least one tyre.

13. A vehicle (10) comprising processing circuitry to perform the computer-implemented method (200) of any of claims 1 to 11.

14. A computer program product comprising program code for performing, when executed by processing circuitry, the computer-implemented method (200) of any of claims 1 to 11.

15. A non-transitory computer-readable storage medium comprising instructions, which when executed by processing circuitry, cause the processing circuitry to perform the computer-implemented method (200) of any of claims 1 to 11.

FIG. 1

200

202

204

206

208

210

**FIG. 2**

FIG. 3

FIG. 4

FIG. 5

FIG. 6

**FIG. 7**

**FIG. 8**

**FIG. 9**

Europäisches
Patentamt

European
Patent Office

Office européen
des brevets

# EUROPEAN SEARCH REPORT

**Application Number**

EP 24 17 4971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/203395 A1 (HESSELL STEVEN M [US] ET AL) 9 August 2012 (2012-08-09) * paragraphs [0012] - [0015]; figure 3 * * paragraphs [0018] - [0035]; figures 1,2 * * the whole document * | 1-15 | INV. B60W50/00 |
| X | US 2023/100017 A1 (ITO AKIRA [JP] ET AL) 30 March 2023 (2023-03-30) * paragraphs [0067] - [0092]; figure 4 * * the whole document * | 1,7,10, 12-15 | |
| A | WO 2022/214174 A1 (VOLVO TRUCK CORP [SE]) 13 October 2022 (2022-10-13) * claim 1; figure 3 * | 1,12-15 | |

**TECHNICAL FIELDS SEARCHED (IPC)**

B60W

The present search report has been drawn up for all claims

| Place of search | Date of completion of the search | Examiner |
|---|---|---|
| Munich | 2 October 2024 | Plenk, Rupert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 4971

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | Publication date | Patent family member(s) | Publication date |
|---|---|---|---|
| US 2012203395 A1 | 09-08-2012 | CN 102627107 A | 08-08-2012 |
| | | DE 102012002054 A1 | 09-08-2012 |
| | | US 2012203395 A1 | 09-08-2012 |
| US 2023100017 A1 | 30-03-2023 | DE 102022207763 A1 | 30-03-2023 |
| | | JP 2023048674 A | 07-04-2023 |
| | | US 2023100017 A1 | 30-03-2023 |
| WO 2022214174 A1 | 13-10-2022 | CN 117120283 A | 24-11-2023 |
| | | EP 4319996 A1 | 14-02-2024 |
| | | JP 2024517378 A | 22-04-2024 |
| | | KR 20230167362 A | 08-12-2023 |
| | | US 2024182041 A1 | 06-06-2024 |
| | | WO 2022214174 A1 | 13-10-2022 |